# FASCICULE DE BREVET EUROPEEN

(11) **EP 3 472 916 B1**
(45) Date de publication et mention de la délivrance du brevet: **14.10.2020**
(21) Numéro de dépôt: 17730088.6
(22) Date de dépôt: 02.06.2017
(51) Int. Cl.: B60L 58/12

(54) **PROCÉDÉ ET SYSTÈME DE GESTION INTELLIGENTE DE BATTERIES ÉLECTROCHIMIQUES D'UN VÉHICULE ÉLECTRIQUE**
VERFAHREN UND SYSTEM ZUR INTELLIGENTEN VERWALTUNG VON ELEKTROCHEMISCHEN BATTERIEN FÜR EIN ELEKTROFAHRZEUG
METHOD AND SYSTEM OF SMART MANAGEMENT OF ELECTROCHEMICAL BATTERIES FOR AN ELECTRIC VEHICLE

(30) Priorité: 16.06.2016 FR 1655624
(43) Date de publication de la demande: 24.04.2019
(73) Titulaire: Bluebus, 29500 Ergue Gaberic (FR)
(72) Inventeur: SELLIN, Christian, 29900 Concarneau (FR); JESTIN, Jean-Jacques, 29170 Fouesnant (FR); AGNUS, Yvan, 29000 Quimper (FR); HINGANT, Dominique, 29140 Saint Yvi (FR); TAN, Tony, 35000 Rennes (FR); BRUNET, Gilles, 29710 Ploneis (FR); THOMAS, Michel, 29710 Pouldreuzic (FR)
(74) Mandataire: IPAZ
(86) Numéro de dépôt international: PCT/EP2017/063542
(87) Numéro de publication internationale: WO 2017/215966

(56) Documents cités:
- EP-A1- 2 814 132
- FR-A1- 2 691 022
- FR-A1- 2 861 338
- FR-A1- 2 866 279
- FR-A1- 2 987 789
- US-A1- 2003 015 992
- US-A1- 2016 075 254

## Description

La présente invention concerne un procédé de gestion intelligente des batteries électrochimiques d'un véhicule électrique. Elle concerne également un système mettant en œuvre un tel procédé et un véhicule électrique mettant en œuvre un tel procédé ou un tel système.

Le domaine de l'invention est le domaine de véhicules électriques comprenant plusieurs batteries électrochimiques, en particulier de type LMP® (pour « Lithium Métal Polymère »), montées en parallèle.

### Etat de la technique

On connait des véhicules électriques alimentés par plusieurs modules de stockage d'électricité montés en parallèle et comprenant chacun une ou plusieurs batteries électrochimiques, en particulier de type LMP®. Chaque module délivre un signal haute-tension pour alimenter le ou les moteurs électriques du véhicule.

Pour assurer une autonomie suffisante à un véhicule électrique, il est nécessaire d'embarquer dans le véhicule plusieurs batteries permettant d'emmagasiner l'énergie électrique nécessaire à l'autonomie souhaitée. En fonction de la puissance souhaitée au niveau de la chaîne de traction, et de la puissance disponible au niveau de chaque batterie, il peut être nécessaire d'utiliser plusieurs batteries en parallèle pour alimenter la chaîne de traction du véhicule. Un exemple est le document US 2016/075254 A1 décrivant l'utilisation de plusieurs modules et connectant ou déconnectant les modules en fonction de leur état de charge. Les batteries utilisée sont des batteries Lithium n'ayant pas les contraintes des batteries Lithium Métal Polymère.

Dans le même temps, on sait que les batteries électrochimiques supportent mal une décharge lente. De plus, dans le cas des batteries de type LMP® (pour « Lithium Métal Polymère »), il est nécessaire de maintenir toutes les batteries à une température de fonctionnement minimale, en général supérieure ou égale à 80°C. De plus, lorsque plusieurs batteries sont utilisées en même temps, il est préférable que chacune de ces batteries présentent un même niveau de charge.

Cependant, à l'heure actuelle, il n'existe aucun procédé de gestion des modules de stockage d'énergie électrique rechargeables d'un véhicule électrique permettant de satisfaire de manière intelligente l'ensemble de ces exigences.

Un but de la présente invention est de remédier à cet inconvénient.

Un autre but de l'invention est de proposer un procédé de gestion intelligente des modules de stockage d'énergie électrique d'un véhicule électrique montés en parallèle.

Il est aussi un but de l'invention de proposer un procédé de gestion des modules de stockage d'énergie électrique d'un véhicule électrique, montés en parallèle, permettant d'optimiser la durée de vie desdits modules tout en maintenant lesdits modules prêts à l'utilisation à tout moment.

### Exposé de l'invention

L'invention permet d'atteindre au moins l'un de ces buts par un procédé de gestion d'une pluralité de modules de stockage d'énergie électrique rechargeables dans un véhicule électrique, lesdits modules comprenant, chacun, au moins une batterie électrochimique rechargeable, en particulier de type LMP®, et étant agencés en parallèle les uns avec les autres, ledit procédé comprenant :
- une séparation desdits modules en au moins deux groupes, et
- une alimentation à partir d'un desdits groupes à la fois, en particulier à tour de rôle, et encore plus particulièrement de manière alternée ;
ledit procédé comprenant, pendant l'alimentation par un groupe, dit groupe actif, une phase, dite de régulation au sein d'au moins un groupe, dit groupe passif, autre que le groupe actif, ladite phase de régulation comprenant une alimentation d'au moins un module dudit groupe passif par au moins un autre module, dit fonctionnel, dudit groupe passif.

Ainsi, le procédé selon l'invention propose de séparer virtuellement les modules de stockage d'énergie électrique rechargeables en plusieurs groupes, et une utilisation d'un groupe à la fois pour réaliser une alimentation. Ainsi, il est possible d'appliquer des cycles de décharge rapide à chaque groupe, et par conséquent, d'optimiser la durée de vie de chaque module.

De plus, lorsqu'un groupe, dit passif, n'est pas utilisé alors un module, dit fonctionnel, faisant partie dudit groupe passif est utilisé pour alimenter les autres modules de ce groupe passif pour les réguler de sorte à les maintenir prêts à être utilisés.

Dans la présente demande, par « séparation » on entend un regroupement virtuel des modules, indépendamment de leur disposition physique.

Préférentiellement, la phase de régulation d'un groupe passif peut réaliser un équilibrage du niveau de charge d'au moins un, et en particulier de chaque, module dudit groupe passif.

Par exemple, la phase de régulation peut réaliser une décharge du module fonctionnel pour équilibrer son niveau de charge restante avec le niveau de charge restante d'au moins un autre module du groupe passif. Dans ce cas, le module fonctionnel peut être utilisé pour alimenter, par exemple, un dispositif auxiliaire du véhicule, en particulier externe au groupe passif.

Alternativement, ou en plus, le module fonctionnel du groupe passif peut être utilisé pour équilibrer les niveaux de charge restante des modules du groupe passif, par exemple en alimentant au moins un autre module du groupe passif. Dans cet exemple, le module fonctionnel se décharge dans au moins un autre module du groupe passif pour recharger ledit au moins un autre module du groupe passif.

Alternativement, ou en plus, la phase de régulation d'un groupe passif peut réaliser un maintien en température, d'au moins un, en particulier de chaque, module dudit groupe passif.

Autrement dit, le module fonctionnel du groupe passif peut être utilisé pour maintenir en chauffe au moins un, en particulier, tous les modules du groupe passif, y compris lui-même, à une température supérieure ou égale à une température prédéterminée.

Lorsque la phase de régulation d'un groupe passif réalise un maintien en température, alors le module fonctionnel du groupe passif est utilisé pour alimenter un moyen de chauffe, tel qu'une résistance de chauffe ou un circuit de chauffe, d'au moins un, en particulier de chaque, module du groupe passif, y compris le sien.

Suivant une version particulièrement préférée du procédé selon l'invention, pour au moins un groupe passif, la phase de régulation peut comprendre une permutation, en particulier à tour de rôle, du module fonctionnel au sein du groupe passif.

Ainsi, le procédé selon l'invention permet de réaliser une meilleure gestion des modules du groupe passif.

Avantageusement, la permutation peut être réalisée en fonction du niveau de charge restante (NCR) de chacun des modules du groupe passif.

En particulier, la permutation peut être réalisée lorsque le niveau de charge restante du module fonctionnel devient inférieur ou égal au niveau de charge restante d'un autre module du groupe passif, d'une première valeur prédéterminée.

Avantageusement, la première valeur prédéterminée peut correspondre à un pourcentage d'une capacité de charge maximale (CCM), ou d'un niveau de charge restante (NCR), de l'un au moins des modules du groupe passif.

Suivant un premier exemple de réalisation, la première valeur prédéterminée peut être constante.

Par exemple, la première valeur prédéterminée peut être égale à 5% de la CCM d'un module.

Suivant un autre exemple de réalisation, la première valeur prédéterminée peut être variable.

Plus particulièrement, la première valeur prédéterminée peut être fonction du niveau de charge restante au niveau de chaque module du groupe passif.

En particulier, la valeur prédéterminée peut diminuer lorsque le niveau de charge restante de chaque module du groupe passif diminue.

Suivant un exemple de réalisation non limitatif, la première valeur prédéterminée peut être égale à :
- 5% de la CCM d'un module du groupe passif lorsque tous les modules dudit groupe passif présentent un NCR supérieur à 70% de la CCM ;
- 4% de la CCM d'un module du groupe passif lorsqu'au moins un module dudit groupe passif présentent un NCR compris entre 50% et 70% de la CCM ;
- 3% de la CCM d'un module du groupe passif lorsqu'au moins un module dudit groupe passif présente un NCR compris entre 30% et 50% de la CCM ; et
- 2% de la CCM d'un module du groupe passif lorsqu'au moins un module dudit groupe passif présente un NCR inférieur à 30% de la CCM.

Suivant un mode de réalisation non limitatif, le procédé selon l'invention peut comprendre un basculement de l'alimentation d'un groupe à un autre, réalisé en fonction des niveaux de charge restante desdits groupes.

Plus particulièrement, le basculement d'un groupe à l'autre peut être réalisé lorsque le niveau de charge restante du groupe actif est inférieur ou égal au niveau de charge restante d'un groupe passif, en particulier d'une deuxième valeur prédéterminée.

Avantageusement, la deuxième valeur prédéterminée peut correspondre à un pourcentage d'une capacité de charge maximale (CCM), ou d'un niveau de charge restante (NCR), de l'un au moins des groupes.

Suivant un premier exemple de réalisation, la deuxième valeur prédéterminée peut être constante.

Par exemple, la deuxième valeur prédéterminée peut être égale à 5% de la CCM d'un groupe.

Suivant un autre exemple de réalisation, la deuxième valeur prédéterminée peut être variable.

Plus particulièrement, la deuxième valeur prédéterminée peut être fonction du NCR de chaque groupe.

En particulier, la deuxième valeur prédéterminée peut diminuer lorsque le NCR de chaque groupe diminue.

Suivant un exemple de réalisation non limitatif, la deuxième valeur prédéterminée peut être égale à :
- 10% de la CCM d'un groupe lorsque tous les groupes présentent un NCR supérieur à 70% de la CCM ;
- 8% de la CCM d'un groupe lorsqu'au moins un groupe présente un NCR compris entre 50% et 70% de la CCM ;
- 5% de la CCM d'un groupe lorsqu'au moins un groupe présente un NCR compris entre 30% et 50% de la CCM ;
- 3% de la CCM d'un groupe lorsqu'au moins un groupe présente un NCR inférieur à 30% de la CCM.

Dans une version préférée, chaque groupe peut comprendre un nombre identique de modules.

Le nombre de modules peut être déterminé en fonction d'une puissance totale souhaitée lors de l'étape d'alimentation et de la puissance qui peut être délivrée par chaque module.

Dans une version préférée, tous les modules sont identiques et délivrent, chacun, une même puissance nominale.

Avantageusement, le module fonctionnel du groupe passif peut en outre être utilisé pour l'alimentation d'un dispositif auxiliaire au sein du véhicule électrique, interne ou externe au groupe passif.

Le procédé selon l'invention peut en outre comprendre, pour chaque module, une mesure d'au moins un, en particulier de chacun, des paramètres suivants :
- un niveau de charge restante dudit module, par exemple par une jauge de charge ;
- une température dudit module, par exemple par un thermomètre ou un thermocouple ; et/ou
- une tension aux bornes dudit module, par exemple par un Voltmètre.

L'un au moins de ces paramètres peut être utilisé pour déterminer si un basculement, respectivement une permutation, vers un autre groupe, respectivement vers un autre module du groupe passif, doit être réalisé(e) ou non.

Selon un autre aspect de la même invention, il est proposé un système de gestion d'une pluralité de modules de stockage d'énergie électrique rechargeables dans un véhicule électrique, lesdits modules comprenant, chacun, au moins une batterie électrochimique rechargeable, en particulier de type LMP®, et étant agencés en parallèle les uns avec les autres, ledit système comprenant :
- pour chaque module, un moyen de connexion/déconnexion individuel, permettant de mettre en décharge ledit module indépendamment des autres modules, et
- au moins un superviseur pour commander, directement ou indirectement, chacun desdits moyens de connexion/déconnexion ;
ledit superviseur étant configuré pour mettre en œuvre toutes les étapes du procédé selon l'invention.

Selon encore un autre aspect de la même invention, il est proposé un véhicule électrique embarquant une pluralité de modules de stockage d'énergie électrique rechargeables alimentant ledit véhicule, lesdits modules comprenant, chacun, au moins une batterie électrochimique rechargeable, en particulier de type LMP®, et étant agencés en parallèle les uns avec les autres, lesdits modules étant gérés :
- conformément au procédé selon l'invention ; ou
- par un système selon l'invention.

Le véhicule selon l'invention peut par exemple être un véhicule de transport en commun du type bus, car, ou tram-bus.

Dans la présente invention, le terme « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Dans le cas d'un véhicule de type tram-bus, le véhicule peut en outre comprendre des supercapacités auxquelles le principe de la présente invention ne s'applique pas.

Le basculement de l'alimentation d'un groupe à l'autre peut avantageusement être réalisé lorsque le véhicule est à l'arrêt.

Ainsi, le véhicule selon l'invention permet de minimiser d'éventuels risques, ou dysfonctionnements, qui peuvent être liés à un tel basculement lorsque le véhicule est en mouvement.

De manière similaire, la permutation du module fonctionnel dans un groupe passif peut avantageusement être réalisée lorsque le véhicule est à l'arrêt.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple non limitatif d'un véhicule électrique selon l'invention ;
- les FIGURES 2a et 2b sont des représentations schématiques de deux exemples non limitatifs de branchement en parallèle des modules de stockage d'énergie électrique du véhicule de la FIGURE 1 ;
- la FIGURE 3 est une représentation schématique, sous la forme d'un diagramme, d'un exemple de réalisation non limitatif du procédé selon l'invention ; et
- les FIGURES 4a-4f sont des représentations d'un exemple d'application du procédé de la FIGURE 3 dans le cas du véhicule de la FIGURE 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

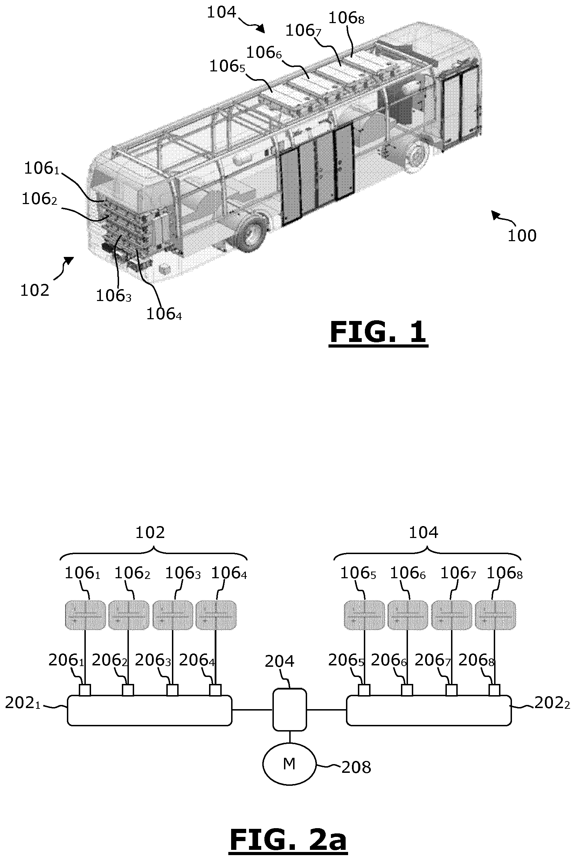

La FIGURE 1 est une représentation schématique d'un exemple non limitatif d'un véhicule électrique selon l'invention.

Le véhicule électrique 100 représenté sur la FIGURE 1 est un bus électrique comportant un ou plusieurs moteurs électriques (non représentés).

Le véhicule comprend un premier groupe 102 et un deuxième groupe 104 comprenant chacun quatre modules de stockage d'énergie électrique rechargeables, à savoir les modules 106₁-106₄ pour le groupe 102 et les modules 106₅-106₈ pour le groupe 104. Le groupe 102 est disposé du côté d'une paroi arrière du bus 100. Le groupe 104 est disposé dans un logement aménagé dans une paroi supérieure du bus 100.

Le bus électrique 100 est mis en mouvement exclusivement par l'énergie électrique fournie par les groupes 102 et 104.

Chaque module de stockage d'énergie électrique rechargeable 106 comprend une ou plusieurs batteries de type LMP® (pour « Lithium Métal Polymère »). Les modules 106 sont tous identiques et fournissent une même puissance nominale.

Chaque module de stockage d'énergie électrique rechargeable 106 comporte en outre une résistance de chauffe (non représentée) pour chauffer ledit module, et qui peut être alimentée indépendamment.

La FIGURE 2a est une représentation schématique d'un exemple non limitatif de branchement en parallèle de modules de stockage d'énergie électrique dans un véhicule selon l'invention, et en particulier dans le bus 100 de la FIGURE 1.

Dans l'exemple représenté sur la FIGURE 2a, les modules 106₁-106₄ du groupe 102 sont branchés sur un module de gestion 202₁, également appelé superviseur de groupe, et les modules 106₅-106₈ du groupe 104 sont branchés sur un module de gestion 202₂, également appelé superviseur de groupe.

Les superviseurs de groupe 202₁ et 202₂ sont à leur tour branchés sur un superviseur central 204, qui lui-même est branché, directement ou indirectement, au(x) moteur(s) électrique(s) 208 en vue de son(leur) alimentation par les modules 106.

En particulier, chaque module 106₁-106₄ du groupe 102 est branché au superviseur de groupe 202₁ par l'intermédiaire d'un contacteur, respectivement 206₁-206₄, commandable par le superviseur de groupe 202₁ ou par le superviseur central 204. De manière similaire, chaque module 106₅-106₈ du groupe 104 est branché au superviseur de groupe 202₂ par l'intermédiaire d'un contacteur, respectivement 206₅-206₈, commandable par le superviseur de groupe 202₂ ou par le superviseur central 204.

Chaque contacteur 206ᵢ peut être commandé individuellement par le superviseur central 204, directement ou par l'intermédiaire des superviseurs de groupe 202₁-202₂, pour être mis soit dans un état fermé laissant passer le courant fourni par le module 106ᵢ, soit dans un état ouvert interdisant le passage du courant fourni par le module 106ᵢ.

Le superviseur central 204 comprend :
- un moyen de mesure (non représenté) d'un niveau de charge restante (NCR) de chaque module 106 de manière individuelle,
- un moyen de mesure (non représenté) d'une température de chaque module 106 de manière individuelle, et/ou
- un moyen de mesure (non représenté) d'une tension aux bornes de chaque module 106 de manière individuelle.

Le superviseur central 204 est en outre configuré pour comparer chacune des valeurs mesurées pour chaque module, à une ou plusieurs valeurs, ou plages de valeurs, prédéterminées, pour déterminer si ledit module est défaillant ou fonctionnel.

Bien entendu, la mesure et la comparaison de ces paramètres peuvent alternativement être réalisées par un autre organe que le superviseur central 204, tel que par exemple par chaque superviseur de groupe 202₁-202₂.

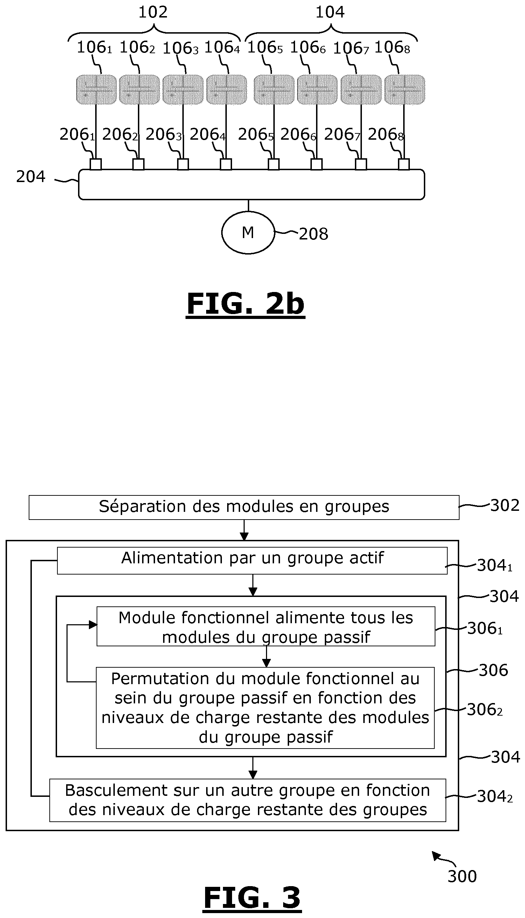

La FIGURE 2b est une représentation schématique d'un autre exemple non limitatif de branchement en parallèle de modules de stockage d'énergie électrique dans un véhicule selon l'invention, et en particulier dans le bus 100 de la FIGURE 1.

L'exemple représenté sur la FIGURE 2b comprend tous les éléments de l'exemple de la FIGURE 2a, sauf les superviseurs de groupe 202.

Dans l'exemple représenté sur la FIGURE 2b, les modules 106₁-106₈ sont directement branchés au superviseur central 204 par les contacteurs 206₁-206₈, sans utilisation des superviseurs de groupe 202₁ et 202₂. Les modules 106ᵢ sont alors tous agencés en parallèle les uns par rapport aux autres.

La FIGURE 3 est une représentation schématique d'un premier exemple non limitatif d'un procédé de gestion selon l'invention.

Le procédé 300, représenté sur la FIGURE 3, comprend une étape 302 de séparation des modules en plusieurs groupes, par exemple en exactement deux groupes, tels que les groupes 102 et 104.

Lors de cette étape de séparation 302, la disposition physique des modules peut être prise en compte pour la constitution des groupes, par exemple comme représenté sur la FIGURE 2a. Alternativement, il est possible de ne pas prendre en compte une disposition physique des modules, par exemple comme représenté sur la FIGURE 2b.

Lors d'une étape 304, le procédé 300 réalise une alimentation alternée et à tour de rôle à partir de chacun des groupes. Pour ce faire, une étape 304₁ réalise une alimentation à partir de l'un des groupes. Le groupe en cours d'alimentation est appelé groupe actif et le ou les autres groupes sont appelé(s) groupe(s) passif(s). Le niveau de charge restante (NCR) du groupe actif est surveillé lors de l'étape d'alimentation 304₁. Puis, en fonction d'une règle prédéterminée, une étape 304₂ réalise un basculement de l'alimentation vers un autre groupe passif, et ainsi de suite.

Le basculement d'un groupe à l'autre, lors de l'étape 304₂, peut être réalisé en fonction des niveaux de charge restante (NCR) de chaque groupe et de la capacité de charge maximale (CCM) des groupes.

En particulier, le basculement du groupe actif vers un groupe passif est réalisé lorsque le NCR du groupe actif devient inférieur ou égal au NCR d'un groupe passif d'une valeur prédéterminée, qui est égale à :
- 10% de la CCM d'un groupe lorsque tous les groupes présentent un NCR supérieur à 70% de la CCM ;
- 8% de la CCM d'un groupe lorsqu'au moins un groupe présente un NCR compris entre 50% et 70% de la CCM ;
- 5% de la CCM d'un groupe lorsqu'au moins un groupe présente un NCR compris entre 30% et 50% de la CCM ; et
- 3% de la CCM d'un groupe lorsqu'au moins un groupe présente un NCR inférieur à 30% de la CCM.

Dans le cas d'un véhicule électrique, tel que le bus 100 de la FIGURE 1, le basculement de l'alimentation d'un groupe à l'autre est préférentiellement réalisée lors d'un arrêt du véhicule, pour éviter tout risque lié audit basculement.

Pendant l'alimentation par un groupe actif, le procédé 300 comprend une phase 306 de régulation réalisée au sein de chaque groupe passif.

Pour ce faire, pour chaque groupe passif, une étape 306₁ réalise une alimentation à partir d'un module du groupe passif :
- d'une résistance de chauffe de chaque module du groupe passif,
- et éventuellement, d'un dispositif auxiliaire du véhicule.

Le module en cours d'alimentation du groupe passif est appelé module fonctionnel et tous les autres modules du groupe passif sont appelés modules passifs.

Le niveau de charge restante (NCR) du module fonctionnel du groupe passif est surveillé lors de l'étape d'alimentation 306₁. Puis, en fonction d'une règle prédéterminée, une étape 306₂ réalise une permutation du module fonctionnel au sein du groupe passif.

La permutation du module fonctionnel, lors de l'étape 306₂, peut être réalisée en fonction des niveaux de charge restante (NCR) de chaque module du groupe passif et de la capacité de charge maximale (CCM) d'un module du groupe passif.

En particulier, la permutation du module fonctionnel au sein d'un groupe passif est réalisée lorsque le NCR du module fonctionnel devient inférieur ou égal au NCR d'un module d'une valeur prédéterminée, qui est égale à :
- 5% de la CCM d'un module lorsque tous les modules du groupe passif présentent un NCR supérieur à 70% de la CCM ;
- 4% de la CCM d'un module lorsqu'au moins un module du groupe passif présente un NCR compris entre 50% et 70% de la CCM ;
- 3% de la CCM d'un module lorsqu'au moins un module du groupe passif présente un NCR compris entre 30% et 50% de la CCM ; et
- 2% de la CCM d'un module lorsqu'au moins un module du groupe passif présente un NCR inférieur à 30% de la CCM.

Dans le cas d'un véhicule électrique, tel que le bus 100 de la FIGURE 1, l'étape de permutation 306₂ est préférentiellement réalisée lors d'un arrêt du véhicule, pour éviter tout risque lié à ladite permutation.

La phase de régulation 306 peut être réalisée pour maintenir la température des modules du groupe passif au-dessus d'une valeur prédéterminée, telle que par exemple 80°C. Dans ce cas, lors de la phase de régulation 306, le module fonctionnel alimente la résistance de chauffe de chaque module du groupe passif, y compris la sienne.

En plus ou alternativement, la phase de régulation 306 peut être réalisée pour équilibrer le niveau de charge restante (NCR) des modules du groupe passif. Dans ce cas, lors de la phase de régulation 306, le module fonctionnel peut alimenter la résistance de chauffe de chaque module du groupe passif, et/ou un dispositif auxiliaire externe au groupe passif.

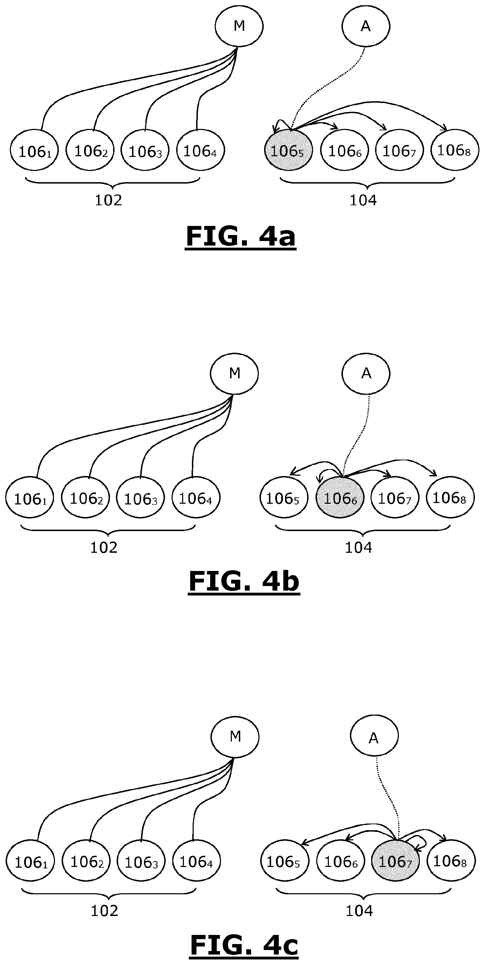

Les FIGURES 4a-4f sont des représentations d'un exemple d'application du procédé 300 de la FIGURE 3 dans le cas du véhicule 100 de la FIGURE 1.

Le moteur « M » du véhicule 100 est alimenté, de manière alternée, par les groupes 102 et 104. Ainsi :
- sur les FIGURES 4a-4c, le moteur M est alimenté par le groupe 102, puis

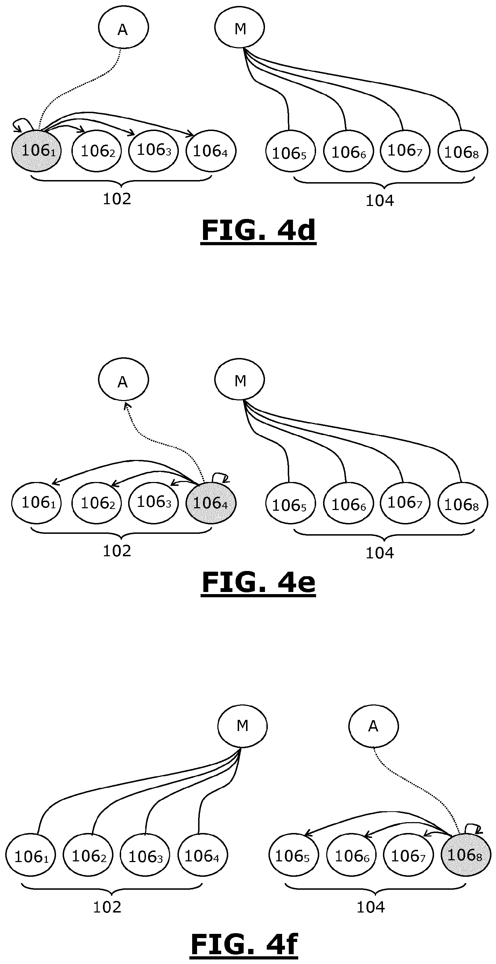

- sur les FIGURES 4d-4e, le moteur M est alimenté par le groupe 104, ensuite
- sur la FIGURE 4f, le moteur M est alimenté de nouveau par le groupe 102.

En référence aux FIGURES 4a-4c, le groupe actif alimentant le moteur est le groupe 102 et le groupe 104 est le groupe passif. Une régulation est réalisée au sein du groupe 104. Lors de cette régulation, tous les modules 106₅-106₈ du groupe passif 104, et éventuellement un dispositif auxiliaire noté « A », sont alimentés par un module, dit fonctionnel, choisi au sein du groupe passif 104. Ce module fonctionnel est permuté de sorte que :
- sur la FIGURE 4a, le module fonctionnel du groupe passif 104 est le module 106₅, puis
- sur la FIGURE 4b, le module fonctionnel du groupe passif 104 est le module 106₆, puis
- sur la FIGURE 4c, le module fonctionnel du groupe passif 104 est le module 106₇.

En référence aux FIGURES 4d-4e, le groupe actif alimentant le moteur est le groupe 104 et le groupe 102 est le groupe passif. Une régulation est réalisée au sein du groupe 102. Lors de cette régulation, tous les modules 106₁-106₄ du groupe passif 102, et éventuellement un dispositif auxiliaire noté « A », sont alimentés par un module, dit fonctionnel, choisi au sein du groupe passif 102. Ce module fonctionnel est permuté de sorte que :
- sur la FIGURE 4d, le module fonctionnel du groupe passif 102 est le module 106₁, puis
- sur la FIGURE 4e, le module fonctionnel du groupe passif 102 est le module 106₄.

En référence à la FIGURE 4f, le groupe actif alimentant le moteur est de nouveau le groupe 102 et le groupe 104 est de nouveau le groupe passif. Une régulation est réalisée au sein du groupe passif 104. Lors de cette régulation, tous les modules 106₅-106₈ du groupe passif 104, et éventuellement un dispositif auxiliaire noté « A », sont alimentés par un module, dit fonctionnel, choisi au sein du groupe passif 104. Ce module fonctionnel est, sur la FIGURE 4f, le module 106s.

Bien entendu, l'invention n'est pas limitée aux exemples détaillés ci-dessus. En particulier, le nombre de modules de stockage, le nombre de groupes de modules et le nombre de modules par groupe, ne sont pas limités à ceux donnés dans les exemples décrits ci-dessus, et correspondent au maximum de modules de stockage d'énergie dépendant notamment du poids du véhicule et de l'autonomie souhaitée pour le véhicule.

## Revendications

1. Procédé (300) de gestion d'une pluralité de modules de stockages d'énergie électrique rechargeables (106₁-106₈) dans un véhicule électrique (100), lesdits modules (106₁-106₈) comprenant, chacun, au moins une batterie électrochimique rechargeable lithium-métal-polymère, et étant agencés en parallèle les uns avec les autres, ledit procédé (300) comprenant :
- une séparation (302) desdits modules (106₁-106₈) en au moins deux groupes (102,104), et
- une alimentation (304) à partir d'un desdits groupes (102,104) à la fois ;
ledit procédé (300) comprenant, pendant l'alimentation par un groupe (102, 104), dit groupe actif, une phase (306), dite de régulation, au sein d'au moins un groupe (104,102), dit groupe passif, autre que le groupe actif (102,104), ladite phase de régulation (306) comprenant une alimentation (306₁) d'au moins un module, dit passif, dudit groupe passif (104,102) par au moins un autre module, dit fonctionnel, dudit groupe passif (104,102).

2. Procédé (300) selon la revendication précédente, **caractérisé en ce que** la phase de régulation (306) d'un groupe passif réalise un maintien en température d'au moins un des modules dudit groupe passif.

3. Procédé (300) selon l'une quelconque des revendications précédentes, **caractérisé en ce que** la phase de régulation (306) d'un groupe passif réalise un équilibrage du niveau de charge restante d'au moins un des modules dudit groupe passif.

4. Procédé (300) selon l'une quelconque des revendications précédentes, **caractérisé en ce que**, pour au moins un groupe passif, la phase de régulation (306) comprend une permutation (306₂), en particulier à tour de rôle, du module fonctionnel au sein dudit groupe passif.

5. Procédé (300) selon la revendication précédente, **caractérisé en ce que** la permutation (306₂) est réalisée en fonction du niveau de charge restante de chacun des modules du groupe passif.

6. Procédé (300) selon l'une quelconque des revendications 4 ou 5, **caractérisé en ce que** la permutation (306₂) est réalisée lorsque le niveau de charge restante du module fonctionnel devient inférieur ou égal au niveau de charge restante d'un autre module du groupe passif, d'une première valeur prédéterminée.

7. Procédé (300) selon l'une quelconque des revendications précédentes, **caractérisé en ce qu'**il comprend un basculement (304₂) de l'alimentation d'un groupe à un autre, réalisé lorsque le niveau de charge restante du groupe actif est inférieur ou égal au niveau de charge restante d'un groupe passif, d'une deuxième valeur prédéterminée.

8. Procédé (300) selon la revendication précédente, **caractérisé en ce que** la deuxième valeur prédéterminée est variable en fonction du niveau de charge restante de chaque groupe (102,104).

9. Procédé (300) selon l'une quelconque des revendications précédentes, **caractérisé en ce que** chaque groupe (102,104) comprend un même nombre de modules (106).

10. Procédé (300) selon la revendication précédente, **caractérisé en ce que** le module fonctionnel du groupe passif est utilisé pour l'alimentation d'un dispositif auxiliaire au sein du véhicule.

11. Système de gestion d'une pluralité de modules de stockages d'énergie électrique rechargeables (106₁-106₈) dans un véhicule électrique (100), lesdits modules (106₁-106₈) comprenant, chacun, au moins une batterie électrochimique rechargeable lithium-métal-polymère, et étant agencés en parallèle les uns avec les autres, ledit système comprenant :
- pour chaque module (106₁-106₈), un moyen de connexion/déconnexion individuel (206₁-206₈), permettant de mettre en décharge ledit module (106₁-106₈) indépendamment des autres modules (106₁-106₈), et
- au moins un superviseur (202₁,202₂,204) pour commander, directement ou indirectement, chacun desdits moyens de connexion/déconnexion (206₁-206₈) ;
ledit superviseur (202₁,202₂,204) étant configuré pour mettre en œuvre toutes les étapes du procédé (300) selon l'une quelconque des revendications précédentes.

12. Véhicule électrique (100) embarquant une pluralité de modules de stockage d'énergie électrique rechargeables (106₁-106₈) alimentant ledit véhicule (100), lesdits modules (106₁-106₈) comprenant, chacun, au moins une batterie électrochimique rechargeable lithium-métal-polymère, et agencés en parallèle les uns avec les autres, lesdits modules (106₁-106₈) étant gérés :
- conformément au procédé (300) selon l'une quelconque des revendications 1 à 10 ;
- par un système selon la revendication 11.

13. Véhicule (100) selon la revendication précédente, **caractérisé en ce qu'**il s'agit d'un véhicule de transport en commun du type bus, car ou tram-bus.

14. Véhicule (100) selon l'une quelconque des revendications 12 ou 13, **caractérisé en ce que** le basculement (304₂) de l'alimentation d'un groupe à l'autre est réalisé lorsque le véhicule (100) est à l'arrêt.

## Patentansprüche

1. Verfahren (300) zur Verwaltung einer Vielzahl von wiederaufladbaren Speichermodulen für elektrische Energie (106₁-106₈) in einem Elektrofahrzeug (100), wobei die Module (106₁-106₈) jeweils mindestens eine wiederaufladbare elektrochemische Lithium-Metall-Polymer-Batterie umfassen und miteinander parallel geschaltet sind, wobei das Verfahren (300) umfasst:
- ein Trennen (302) der Module (106₁-106₈) in mindestens zwei Gruppen (102, 104), und
- einen Versorgungsvorgang (304) aus jeweils nur einer der Gruppen (102,104);
wobei während des Versorgungsvorgangs durch eine Gruppe (102, 104), die sogenannte aktive Gruppe, das Verfahren (300) eine sogenannte Regulierungsphase (306) innerhalb mindestens einer sogenannten passiven, von der aktiven Gruppe (102, 104) verschiedenen Gruppe (104, 102) umfasst, wobei die Regulierungsphase (306) einen Versorgungsvorgang (306₁) mindestens eines sogenannten passiven Moduls der passiven Gruppe (104, 102) durch mindestens ein anderes sogenannte Funktionsmodul der passiven Gruppe (104, 102) umfasst.

2. Verfahren (300) nach dem vorhergehenden Anspruch, **dadurch gekennzeichnet, dass** in der Regulierungsphase (306) einer passiven Gruppe ein Halten der Temperatur mindestens eines der Module der passiven Gruppe erfolgt.

3. Verfahren (300) nach einem der vorhergehenden Ansprüche, **dadurch gekennzeichnet, dass** in der Regulierungsphase (306) einer passiven Gruppe ein Ausgleich der Restladungsmenge mindestens eines der Module der passiven Gruppe erfolgt.

4. Verfahren (300) nach einem der vorhergehenden Ansprüche, **dadurch gekennzeichnet, dass** für mindestens eine passive Gruppe die Regulierungsphase (306) eine Umschaltung (306₂) des Funktionsmoduls, insbesondere eines nach dem anderen, innerhalb der passiven Gruppe umfasst.

5. Verfahren (300) nach dem vorhergehenden Anspruch, **dadurch gekennzeichnet, dass** die Umschaltung (306₂) in Abhängigkeit der Restladungsmenge jedes der Module der passiven Gruppe erfolgt.

6. Verfahren (300) nach einem der Ansprüche 4 oder 5, **dadurch gekennzeichnet, dass** die Umschaltung (306₂) dann erfolgt, wenn die Restladungsmenge des Funktionsmoduls kleiner oder gleich der bei einem ersten vorgegebenen Wert liegenden Restladungsmenge eines anderen Moduls der passiven Gruppe wird.

7. Verfahren (300) nach einem der vorhergehenden Ansprüche, **dadurch gekennzeichnet, dass** es eine Umstellung (304₂) der Versorgung von einer Gruppe auf eine andere umfasst, welche erfolgt, wenn die Restladungsmenge einer aktiven Gruppe kleiner oder gleich der bei einem zweiten vorgegebenen Wert liegenden Restladungsmenge einer passiven Gruppe ist.

8. Verfahren (300) nach dem vorhergehenden Anspruch, **dadurch gekennzeichnet, dass** der zweite vorgegebene Wert in Abhängigkeit der Restladungsmenge jeder Gruppe (102, 104) veränderbar ist.

9. Verfahren (300) nach einem der vorhergehenden Ansprüche, **dadurch gekennzeichnet, dass** jede Gruppe (102, 104) eine gleiche Anzahl von Modulen (106) umfasst.

10. Verfahren (300) nach dem vorhergehenden Anspruch, **dadurch gekennzeichnet, dass** das Funktionsmodul der passiven Gruppe zur Versorgung einer Nebenvorrichtung innerhalb des Fahrzeugs verwendet wird.

11. System zur Verwaltung einer Vielzahl von wiederaufladbaren Speichermodulen für elektrische Energie (106₁-106₈) in einem Elektrofahrzeug (100), wobei die Module (106₁-106₈) jeweils mindestens eine wiederaufladbare elektrochemische Lithium-Metall-Polymer-Batterie umfassen und miteinander parallel geschaltet sind, wobei das System umfasst:
- für jedes Modul (106₁-106₈) eine individuelle Verbindungs-/Trennungseinrichtung (206₁-206₈), mittels welcher das Modul (106₁-106₈) unabhängig von den weiteren Modulen (106₁-106₈) entladen wird, und
- mindestens ein Überwachungsprogramm (202₁, 202₂, 204) zur direkten oder indirekten Steuerung der jeweiligen Verbindungs-/Trennungseinrichtungen (206₁-206₈);
wobei das Überwachungsprogramm (202₁, 202₂, 204) dafür eingerichtet ist, alle Verfahrensschritte (300) nach einem der vorhergehenden Ansprüche auszuführen.

12. Elektrofahrzeug (100) mit einer Vielzahl von wiederaufladbaren Speichermodulen für elektrische Energie (106₁-106₈) zur Versorgung des Fahrzeugs (100), wobei die Module (106₁-106₈) jeweils mindestens eine wiederaufladbare elektrochemische Lithium-Metall-Polymer-Batterie umfassen und miteinander parallel geschaltet sind, wobei die Module (106₁-106₈) wie folgt verwaltet werden:
- gemäß dem Verfahren (300) nach einem der Ansprüche 1 bis 10;
- durch ein System nach Anspruch 11.

13. Fahrzeug (100) nach dem vorhergehenden Anspruch, **dadurch gekennzeichnet, dass** es sich um ein Fahrzeug für den öffentlichen Verkehr vom Typ Bus, Reisebus oder Straßenbahn-Bus handelt.

14. Fahrzeug (100) nach einem der Ansprüche 12 oder 13, **dadurch gekennzeichnet, dass** die Umstellung (304₂) der Versorgung von einer Gruppe auf die andere dann erfolgt, wenn das Fahrzeug (100) steht.

## Claims

1. A method (300) for managing a plurality of rechargeable electrical energy storage modules (106₁-106₈) in an electric vehicle (100), said modules (106₁-106₈) each comprising at least one rechargeable electrochemical Lithium-Metal-Polymer battery, and being arranged in parallel with one another, said method (300) comprising:
- separating (302) said modules (106₁-106₈) into at least two groups (102,104), and
- supplying (304) from one of said groups (102,104) at a time;
said method (300) comprising, during supplying by a group (102,104), called active group, a phase (306), called regulation phase, within at least one group (104,102), called passive group, other than the active group (102,104), said regulation phase (306) comprising supplying (306₁) at least one module, called passive module, of said passive group (104,102) by at least one other module, called operational module, of said passive group (104,102).

2. The method (300) according to the preceding claim, **characterized in that** the regulation phase (306) of a passive group carries out temperature maintenance of at least one of the modules of said passive group.

3. The method (300) according to any one of the preceding claims, **characterized in that** the regulation phase (306) of a passive group carries out balancing of the remaining charge level of at least one of the modules of said passive group.

4. The method (300) according to any one of the preceding claims, **characterized in that** for at least one passive group, the regulation phase (306) comprises a change-over (306₂), in particular in turn, of the operational module within said passive group.

5. The method (300) according to the preceding claim, **characterized in that** the change-over (306₂) is carried out as a function of the remaining charge level of each of the modules of the passive group.

6. The method (300) according to either one of claims 4 or 5, **characterized in that** the change-over (306₂) is carried out when the remaining charge level of the operational module becomes less than or equal to the remaining charge level of another module of the passive group, by a first predetermined value.

7. The method (300) according to any one of the preceding claims, **characterized in that** it comprises switching (304₂) the supply from one group to another, carried out when the remaining charge level of the active group is less than or equal to the remaining charge level of a passive group, by a second predetermined value.

8. The method (300) according to the preceding claim, **characterized in that** the second predetermined value is variable as a function of the remaining charge level of each group (102,104).

9. The method (300) according to any one of the preceding claims, **characterized in that** each group (102, 104) comprises one and the same number of modules (106).

10. The method (300) according to the preceding claim, **characterized in that** the operational module of the passive group is used for supplying an auxiliary device within the vehicle.

11. A system for managing a plurality of rechargeable electrical energy storage modules (106₁-106₈) in an electric vehicle (100), said modules (106₁-106₈) each comprising at least one rechargeable electrochemical Lithium-Metal-Polymer battery, and being arranged in parallel with one another, said system comprising:
- for each module (106₁-106₈), a means (206₁-206₈) for individual connection/disconnection, making it possible to place said module (106₁-106₈) on discharge independently of the other modules (106₁-106₈), and
- at least one controller (202₁,202₂,204) for controlling, directly or indirectly, each of said connection/disconnection means (206₁-206₈);
said controller (202₁,202₂,204) being configured in order to implement all the steps of the method (300) according to any one of the preceding claims.

12. An electric vehicle (100) with a plurality of on-board rechargeable electrical energy storage modules (106₁-106₈) supplying said vehicle (100), said modules (106₁-106₈) each comprising at least one rechargeable electrochemical Lithium-Metal-Polymer battery, and arranged in parallel with one another, said modules (106₁-106₈) being managed:
- according to the method (300) according to any one of claims 1 to 10;
- by a system according to claim 11.

13. The vehicle (100) according to the preceding claim, **characterized in that** it is a public transport vehicle of the bus, coach or tyred tram type.

14. The vehicle (100) according to either one of claims 12 or 13, **characterized in that** switching (304₂) the supply from one group to another is carried out when the vehicle (100) is stationary.
